# EUROPEAN PATENT APPLICATION

(11) **EP 3 319 303 A1**
(43) Date of publication of application: **09.05.2018**
(21) Application number: 15897240.6
(22) Date of filing: 02.09.2015
(51) Int. Cl.: H04M 1/725, G06F 21/32, G06F 3/0488, G06Q 20/14

(54) **MOBILE TERMINAL AND METHOD FOR CONTROLLING SAME**

(30) Priority: 30.06.2015 KR 20150093555
(71) Applicant: LG Electronics Inc., Yeongdeungpo-gu Seoul 07336 (KR)
(72) Inventor: SHIM, Hongjo, Seoul 06772 (KR); KIM, Seonghyok, Seoul 06772 (KR); KIM, Hyunwoo, Seoul 06772 (KR); LIM, Gukchan, Seoul 06772 (KR)
(74) Representative: Beyer, Andreas
(86) International application number: PCT/KR2015/009232
(87) International publication number: WO 2017/003018

(57) **Abstract**

The present invention relates to a mobile terminal of which a locked status can be switched to an unlocked status on the basis of a drag input or at least one touch input, and to a method for controlling the same, the mobile terminal comprising: a display unit for displaying image information; a sensing unit for sensing at least one touch input exerted onto the display unit or a drag input applied after the touch input and for sensing a fingerprint of a finger which touches the display unit for the touch input or the drag input; and a control unit for switching a locked status, in which reception of a control command is restricted, to an unlocked status, on the basis of a touch pattern which is formed by the at least one touch input or the drag input which is applied after the touch input or of at least one fingerprint which is sensed when the touch input or the drag input is applied.

## Description

### TECHNICAL FIELD

The present invention relates to a mobile terminal that can be unlocked based on drag input or at least one touch input and a method for controlling the same.

### BACKGROUND ART

Terminals may be generally classified as mobile/portable terminals or stationary terminals according to their mobility. Mobile terminals may also be classified as handheld terminals or vehicle mounted terminals according to whether or not a user can directly carry the terminal.

As the mobile terminal becomes multifunctional, it is implemented as a multimedia player having complicated functions such as capturing images or videos, playing music or videos, playing games, and receiving broadcastings.

Various attempts have been made to implement complicated functions in such a multimedia device by means of hardware or software.

Furthermore, there is currently ongoing research on ways to control various functions of a mobile terminal just by tapping the main body of the terminal multiple times, including unlocking the mobile terminal, and a user interface for this.

### DISCLOSURE OF THE INVENTION

The present invention has been made in an effort to solve the above-described problems, and an aspect of the present invention is to provide a mobile terminal that has stronger security features when tapping the main body of the mobile terminal in order to control the mobile terminal's functions, and a method for controlling the same.

Another aspect of the present invention is to provide a mobile terminal that has stronger security features and can minimize inconvenience to users caused by these stronger security features, and a method for controlling the same.

Another aspect of the present invention is to a mobile terminal that allows a user to select between a user interface including functions stronger security and a user interface not including these functions, for the sake of convenience, and a method for controlling the same.

### TECHNICAL SOLUTION

An exemplary embodiment of the present invention provides a mobile terminal including: a display unit that displays picture information; a sensing unit that senses at least one touch input applied on the display unit or a drag input applied following the touch input and that senses the fingerprint of a finger touching the display unit to apply the touch input or drag input; and a controller that releases a locked state in which reception of control commands is restricted, based on a touch pattern formed by the at least one touch input or the drag input applied following the touch input and at least one fingerprint sensed during application of the touch input or the drag input.

The controller may generate fingerprint information based on at least one of the following: at least one sensed fingerprint, the point in time at which the at least one fingerprint is sensed during application of the touch input or the drag input, and the position on the display unit where the at least one fingerprint is sensed, and may unlock the mobile terminal based the fingerprint information and the touch pattern.

The controller may unlock the mobile terminal if the touch pattern matches a registered one, and may switch the unlocked mobile terminal to different operating states depending on whether the fingerprint information matches registered fingerprint information.

The controller may switch the mobile terminal to a first operating state in which some of the functions executable on the mobile terminal are restricted, if the fingerprint information does not match registered fingerprint information, and may switch the mobile terminal to a second operating state in which all of the functions of the mobile terminal are executable, if the fingerprint information matches registered fingerprint information.

The first operating state may be an operating state in which the execution of functions requiring additional user authentication for executing the functions or functions related to the user's personal information is restricted, among the functions executable on the mobile terminal.

The function requiring additional user authentication may include functions related to bill payments.

The functions related to the user's personal information may be functions related to viewing information about the user's identity, sent and received messages, or images stored in the mobile terminal.

When a function related to the user's personal information is executed while the mobile terminal is in the first operating state, the controller may restrict the display of information about the user's identity, sent and received messages, or images stored in the mobile terminal .

When a function related to the user's personal information is executed while the mobile terminal is in the first operating state, the controller may restrict the display of information about the user's identity, sent and received messages, or images stored in the mobile terminal differently, based on which part of the fingerprint information of the sensed fingerprint matches the registered fingerprint information.

When an event associated with a restricted function occurs while the mobile terminal is in the first operating state, the controller may restrict the display of at least part of information relating to the event.

The first and second operating states may be operating states in which different user interfaces are provided, wherein the first operating state is a user interface that includes no graphical object associated with the execution of the restricted function.

If the mobile terminal is in the first operating state, the controller may set a limit on the amount of money payable based on a set amount.

When there is a request to change a prescribed payment limit, the controller may set a restriction so that only a reduction of the payment limit is allowed depending on the operating state of the mobile terminal.

The fingerprint information may vary depending on a fingerprint forming the fingerprint information, the point in time at which the fingerprint is sensed, and the sensed position of the fingerprint, and when the mobile terminal is unlocked, the controller switches the mobile terminal to one of different operating states corresponding to different fingerprints.

The controller may sense the fingerprint when a touch input matching a preset fingerprint sensing condition, among the at least one touch input, is applied or the preset fingerprint sensing information is met during application of the drag input, wherein the fingerprint sensing information is associated with at least one of the following: the length of time the finger touches the display unit, the pressure of the finger, and the area of contact between the display unit and the finger.

The controller may display a graphical object for indicating whether the fingerprint sensing condition is met or not, around a point on the display unit touched with the finger applying the at least one touch input or the drag input.

The graphical object may correspond to one of the following: the length of time the finger touches the display unit, the pressure of the finger, and the area of contact between the display unit and the finger, wherein, if one among the length of time of the touch, the contact area, and the applied pressure is changed, at least either the size or shape of the graphical object is changed.

Upon sensing the fingerprint, the controller may display a graphical object corresponding to the sensed fingerprint at at least one point on the display unit where the fingerprint is sensed.

Upon sensing the fingerprint, the controller may display a graphical object in at least one area on the display unit to display information on the user's finger matching the sensed fingerprint among registered fingerprints.

Another exemplary embodiment of the present invention provides a method for controlling a mobile terminal, the method including: sensing at least one touch input or a drag input applied on a display unit of the mobile terminal, if the mobile terminal is in locked state in which reception of control commands is restricted; sensing the fingerprint of the finger applying the drag input or the at least one touch input, depending on whether either the drag input or the at least one touch input meets a preset fingerprint sensing condition or not; comparing fingerprint information, which is generated based on a touch pattern formed by the at least one touch input and at least one sensed fingerprint, with a registered touch pattern and registered fingerprint information, respectively; and unlocking the mobile terminal according to the comparison result.

### ADVANTAGEOUS EFFECTS

A mobile terminal and a method for controlling the same according to the present invention has the following effects.

According to at least one of the embodiments of the present invention, the present invention provides stronger security features by unlocking a mobile terminal based on not only a plurality of touch inputs but also fingerprint information sensed from at least one of the touch inputs.

According to at least one of the embodiments of the present invention, the present invention provides stronger security features without the inconvenience of additional input by sensing a user's fingerprint information from at least one of a plurality of touch inputs and unlocking the mobile terminal using the sensed fingerprint information and a touch pattern formed by the touch inputs.

According to at least one of the embodiments of the present invention, the present invention allows the user to selectively use a user interface with no payment functions according to their convenience by providing different user interfaces depending on the user's authentication process.

### BRIEF DESCRIPTION OF THE DRAWINGS

FIG. 1A is a block diagram illustrating a mobile terminal related to the present invention;
FIGS. 1B and 1C are conceptual diagrams of an example of the mobile terminal related to the present invention as viewed from different directions;
FIG. 2 is a flowchart showing an operation process for unlocking the mobile terminal related to the present invention;
FIG. 3 is a flowchart showing in detail an operation process for sensing a plurality of touch inputs and fingerprints during the operation process of FIG. 2;
FIG. 4 is a flowchart showing in detail an operation process for unlocking the mobile terminal based on a plurality of touch inputs and a sensed fingerprint during the operation process of FIG. 2;
FIG. 5 is an illustration of an exemplary process for unlocking a mobile terminal according to an embodiment of the present invention;
FIG. 6 is an illustration of an exemplary process for receiving a user's fingerprint information in a mobile terminal according to an embodiment of the present invention;
FIGS. 7A and 7B are illustrations of examples in which different user interfaces are provided depending on whether there is a fingerprint input or not, in a mobile terminal according to an embodiment of the present invention;
FIG. 8 is an illustration of an example in which, upon occurrence of an event, different information is displayed depending on whether there is a fingerprint input or not, in a mobile terminal according to an embodiment of the present invention;
FIG. 9 is an illustration of an example in which different functions are executed based on fingerprints of different fingers, in a mobile terminal according to an embodiment of the present invention;
FIGS. 10A and 10B are illustrations of examples in which different functions are executed depending on the position of a touch input from which a fingerprint is sensed, among a plurality of touch inputs forming the same touch pattern, in a mobile terminal according to an embodiment of the present invention;
FIGS. 11A and 11B are illustrations of examples in which a locked state is released depending on the sensed position of a fingerprint, in relation to FIGS. 10A and 10B, in a mobile terminal according to an embodiment of the present invention;
FIG. 12 is an illustration of an example in which a locked state is released based on a fingerprint sensed during application of a touch input and a drag input, in a mobile terminal according to an embodiment of the present invention; and
FIG. 13 is an illustration of an example in which a locked state is released by a touch pattern including information about a plurality of simultaneously sensed fingerprints, in a mobile terminal according to an embodiment of the present invention.

### MODES FOR CARRYING OUT THE PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

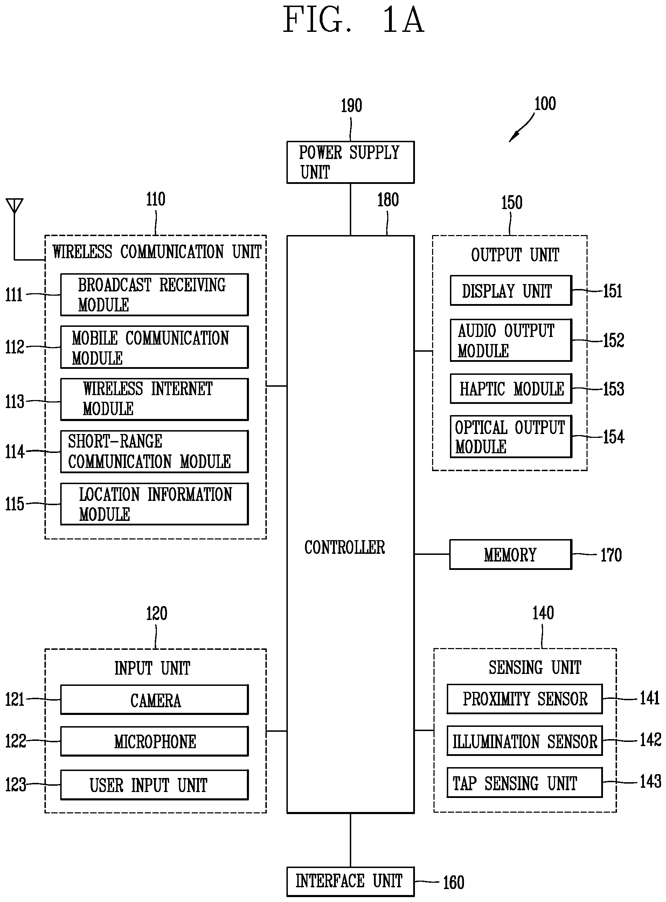

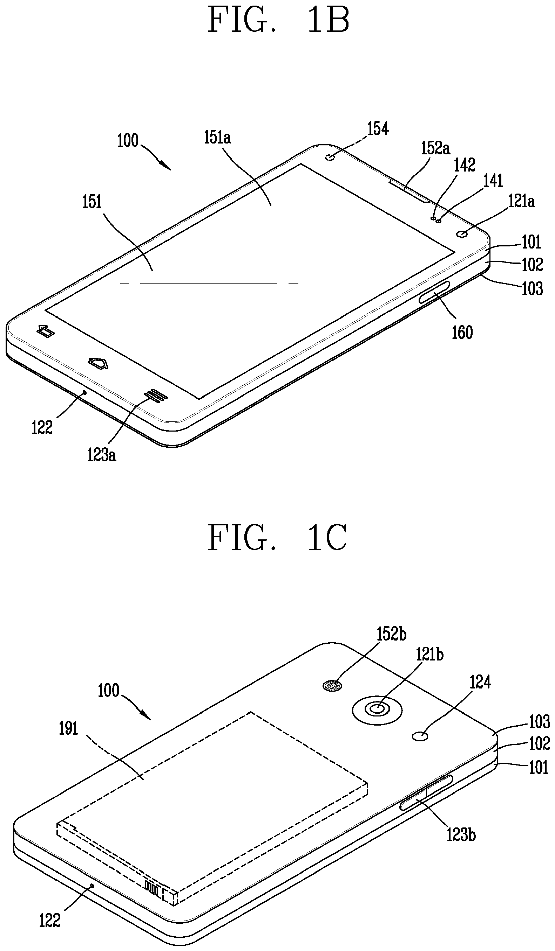

FIG. 1 is a block diagram of a mobile terminal 100 in accordance with the present disclosure.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

The mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the aforementioned various components, or activating application programs stored in the memory 170.

The controller 180 controls some or all of the components illustrated in FIG. 1A in order to drive an application program stored in the memory 170. Further, the controller 180 may operate at least two of the components of the mobile terminal 100 in order to drive the application program.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method for a mobile terminal 100 according to various embodiments to be explained later. The operation or the control method for the mobile terminal may be implemented on the mobile terminal by driving at least one application program stored in the memory 170.

Before explaining various embodiments of the mobile terminal 100, the aforementioned components will be explained in more detail with reference to FIG. 1.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Meanwhile, the sensing unit 140 of the mobile terminal 100 according to an embodiment of the present invention may further include a tap sensing unit 143 for sensing a user's tap or tap gesture on the main body or display unit 151.

Here, the tap sensing unit 143 may sense a tap gesture on the main body or display unit 151 of the mobile terminal 100 or on an object. More specifically, a tap may be construed as the action of lightly hitting a tapping object, such as a finger, on the main body or display unit 151 of the mobile terminal or on an object or the action of lightly touching a tapping object to the main body or display unit 151 of the mobile terminal or to an object.

Meanwhile, such a tapping object for applying a tap may be a thing that can apply an external force on the main body or display unit 151 of the mobile terminal 100 or on an object - for example, a finger, a stylus pen, a pen, a pointer, a fist, etc. The tapping object is not necessarily limited to things that enables touch input on the mobile terminal according to the present invention, but can be of any type as long as it can apply external force on the main body or display unit 151 of the mobile terminal 100 or on an object.

Meanwhile, an object on which the tap gesture can be applied may include at least one among the main body and display unit 151 of the mobile terminal and an object on which the mobile terminal 100 is placed.

Meanwhile, in the present invention, the tap or tap gesture may be sensed by at least one between an acceleration sensor and a touch sensor that are included in the tap sensing unit 143. Here, the acceleration sensor is a sensor capable of measuring the dynamic forces, such as acceleration, vibration, shock, etc., of the main body of the mobile terminal 100.

That is, the acceleration sensor may sense a tap on an object by sensing the motion (or vibration) of the main body of the mobile terminal 100, produced by a tap gesture. Thus, the acceleration sensor may sense a tap on the main body or display unit 151 of the mobile terminal 100 or sense a tap on an object positioned close enough to the mobile terminal 100 to sense any motion or vibration of the main body of the mobile terminal 100.

As such, as long as the acceleration sensor is able to sense the motion or vibration of the main body of the mobile terminal 100, it may sense not only a tap on the main body or display unit 151 of the mobile terminal 100 but also a tap off the main body.

The mobile terminal according to the present invention may use either the accelerator sensor or the touch sensor or use the accelerator sensor and the touch sensor sequentially or simultaneously, in order to sense a tap on the main body or display unit 151 of the mobile terminal 100. A mode in which only the acceleration sensor is used to sense a tap may be called a first mode, a mode in which the touch sensor is used to sense a tap may be called a second mode, and a mode in which both the acceleration sensor and the touch sensor are used (simultaneously or sequentially) may be called a third mode or hybrid mode.

Meanwhile, when sensing a tap through the touch sensor, it is possible to more accurately detect the location of the tap.

Meanwhile, the mobile terminal 100 according to the present invention may operate in a specific mode in which minimum electric current or power is consumed while the display unit 151 of the mobile terminal 100 is inactive, in order to sense a tap through the acceleration sensor or touch sensor. Such a specific mode may be called a 'doze mode'.

For instance, the doze mode may be a mode in which only light emitting elements for outputting a screen on the display unit 151 are off and the touch sensor is on, in a touchscreen structure where the touch sensor and the display unit 151 are layered on top of each other. Alternatively, the doze mode may be a mode in which the display unit 151 is off and the acceleration sensor is on. Alternatively, the doze mode may be a mode in which the display unit 151 is off and both the touch sensor and the acceleration sensor are on.

Accordingly, in the doze mode, that is, when the lighting in the display unit 151 is off or the display unit 151 is off (the display unit 151 is inactive), if the user taps at least one point on the display unit 151 or a particular point on the main body of the mobile terminal 100, the user's tap may be sensed through at least one between the touch sensor or acceleration sensor in the on state.

Moreover, if at least two taps are sensed within a reference time period, the tap sensing unit 143 may determine that a tap for controlling the mobile terminal 100 has been applied. For example, in a case where one tap is applied to the display unit 151 by a touch object capable of touching the display unit 151, the tap sensing unit 143 may recognize this one tap as a touch input. That is, the controller 180 may control a function triggered by a touch input corresponding to the one tap (e.g., selecting an icon shown at the position of the touch input), rather than controlling a function corresponding to the one tap.

Accordingly, if at least two (or multiple) consecutive taps are sensed within a reference time period by the tap sensing unit 143, the controller 180 may determine that a "tap" for controlling one or more functions has been applied.

That is, tap gestures may mean that at least two consecutive tap gestures are sensed within a reference time period. Hence, sensing of a "tap" may hereinafter refer to substantially sensing a plurality of taps on the main body or display unit 151 of the mobile terminal 100 with an object, such as the user's finger or touch pen.

Furthermore, the controller 180 may determine whether the tap is sensed from the user's different fingers or the user's one finger, as well as whether the tap is sensed within the reference time period. For instance, upon sensing taps on the display unit 151, the controller 180 may sense whether the taps are given with one finger or with different fingers, by using the fingerprints sensed from the taps. Alternatively, the controller 180 may sense whether the taps are given with one finger or with different fingers, by detecting the positions of the taps on the display unit 151 or acceleration produced by the taps through at least one between the touch sensor and acceleration sensor in the tap sensing unit 143.

Moreover, the controller 180 may determine whether the user has given the taps with one hand or one finger or with both hands or at least two fingers, based on the angle and distance of the touch.

Meanwhile, the taps may refer to multiple consecutive taps that are sensed within a reference time. Here, the reference time may be a very short period of time, for example, between 300 ms and 2 s.

To this end, when a first tap on the main body of the mobile terminal 100 is sensed by the tap sensing unit 143, the tap sensing unit 143 may sense whether the next tap is given following the first tap within a reference time period after sensing the first tap. Upon sensing the next tap within the reference time period, the tap sensing unit 143 or the controller 180 may determine that a tap for controlling a specific function of the mobile terminal 100 has been sensed according to an embodiment of the present invention. In this way, by recognizing that a valid tap has been given only when a second tap is sensed within a predetermined time after sensing a first tap, the controller 180 may tell whether the user wants to control the mobile terminal 100 or gives a tap by mistake.

Moreover, there may be several methods to recognize the "valid tap". For example, the controller 180 may recognize that the "valid tap" has been given when it senses a second base number of second taps on the main body or the display unit 151 within a predetermined time after sensing a first base number of first taps. Here, the first given number and the second given number may be the same or different. For example, the first given number may be 1, and the second given number may be 2. In another example, the first given number and the second given number may be both 1.

In addition, the controller 180 may determine that the "taps" have been sensed only when the "taps" are applied within a "predetermined area". That is, upon sensing a first tap on the main body or display unit 151 of the mobile terminal, the controller 180 may estimate a predetermined area relative to the point at which the first tap has been sensed. Then, upon sensing the first or second base number of taps or more in the "predetermined area" within the reference time period after the first tap, the controller 180 may determine that the first tap or the second tap has been applied.

Meanwhile, it is needless to say that the above-mentioned reference time period and predetermined area may vary depending on the embodiment.

Meanwhile, it is needless to say that the first tap and the second tap are not only based on the reference time period may be detected as individual taps depending on the sensed position of each tap. That is, upon sensing a second tap at a certain distance from the sensed position of a first tap, the controller 180 may determine that the first tap and the second tap have been applied. Also, when recognizing the first tap and the second tap based on the sensed position, the first tap and the second tap may be sensed simultaneously.

Furthermore, it is needless to say that, when the first tap and the second tap each consist of multiple touches, i.e., multiple taps, the multiple touches forming each of the first and second taps may be sensed simultaneously. For example, upon sensing a first touch of the second touch at a certain distance from the sensed position of a first touch of the first tap, simultaneously with the first touch of the first tap, the controller 180 may sense the first touch of the first tap and the first touch of the second tap individually. Then, upon sensing an additional touch input at each position and then a first or second base number of touches or more at each position, the controller 180 may determine that the first tap and the second tap have been applied.

Meanwhile, when the tap sensing unit 143 senses multiple taps on the main body of the mobile terminal 100, the controller 180 may control at least one of the functions executable on the mobile terminal 100, based on the sensed multiple taps.

For example, if the multiple taps meet a preset condition, the controller 180 may control at least one of the functions executable on the mobile terminal 100. In an example, the controller 180 may control different functions depending on whether the user gives the multiple taps with one finger or one hand or with at least two fingers or both hands. Alternatively, the controller 180 may control at least one of the functions executable on the mobile terminal 100 based on the multiple taps, depending on the current operating status of the mobile terminal 100 and the environmental status of the mobile terminal 100.

Here, the functions executable on the mobile terminal 100 may refer to all kinds of functions that can be executed or run on the mobile terminal 100. For example, one of the executable functions may be an application installed on the mobile terminal 100. For example, the expression "execute a certain function" may refer to "execute or run a certain application on the mobile terminal 100".

In another example, the functions executable on the mobile terminal 100 may refer to functions required for basic operation of the mobile terminal 100. For example, the functions required for basic operation may including turning on/off the lighting in the display unit 151, switching the mobile terminal 100 from a locked state to an unlocked state, setting up a communication network, changing settings information about the mobile terminal 100, and so on.

Hereinafter, the structure of the mobile terminal 100 according to an embodiment of the present invention illustrated in FIG. 1A or the structure of a mobile terminal 100 with the above-described components will be described with reference to FIGS. 1B and 1C.

Referring to FIGS. 1B and 1C, the mobile terminal 100 disclosed herein may be provided with a bar-type terminal body. However, the present invention is not limited to this, but is also applicable to various structures such as watch type, clip type, glasses type or folder type, flip type, slide type, swing type, swivel type, or the like, in which two and more bodies are combined with each other in a relatively movable manner. Discussion herein will often relate to a particular type of mobile terminal. However, such teachings with regard to a particular type of mobile terminal will generally apply to other types of mobile terminals as well.

In this instance, the terminal body may be understood as a concept considering the mobile terminal 100 as at least one assembly.

The mobile terminal 100 may include a case (casing, housing, cover, etc.) forming the appearance of the terminal. As shown in the figures, the mobile terminal 100 may include a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 may be mounted to the front case 101 so as to form the front surface of the terminal body together with the front case 101.

In some instances, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. Further, the rear cover 103 may include an opening for externally exposing a camera 12 b or an audio output unit 152b.

The cases 101, 102, and 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

Meanwhile, the mobile terminal 100 may include a waterproofing unit (not shown) for preventing introduction of water into the terminal body. For example, the waterproofing unit may include a waterproofing member which is located between the window 151 a and the front case 101, between the front case 101 and the rear case 102, or between the rear case 102 and the rear cover 103, to hermetically seal an inner space when those cases are coupled.

The mobile terminal 100 may have a display unit 151, first and second audio output units 152a and 152b, a proximity sensor 141, an illumination sensor 142, an optical output unit 154, first and second cameras 121a and 121b, first and second manipulation units 123a and 123b, a microphone 122, an interface unit 160, and the like.

Hereinafter, description will be given, as illustrated in FIGS. 1B and 1C, of an exemplary embodiment of a mobile terminal, in which the display unit 151, the first audio output unit 152 a, the proximity sensor 141, the illumination sensor 142, the optical output unit 154, the first camera 121a, and the first manipulation unit 123a are disposed on a front surface of a terminal body, the second manipulation unit 123b, the microphone 122, and the interface unit 160 are disposed on a side surface of the terminal body, and the second audio output unit 152b and the second camera 121b are disposed on a rear surface of the terminal body.

However, the components are not limited to this configuration. The components may be excluded, replaced, or disposed on other surfaces as needed. For example, the first manipulation unit 123a may not be provided on the front surface of the terminal body, and the second audio output unit 152b may be provided on the side of the terminal body, rather than on the rear surface of the terminal body.

The display unit 151 may display (or output) information processed in the mobile terminal 100. For example, the display unit 151 may display execution screen information of an application program running on the mobile terminal 100, or user interface (UI) information or graphic user interface (GUI) information according to the execution screen information.

The display unit 151 may include at least one among a liquid crystal display (LCD), a thin film transistor-liquid crystal display (TFT-LCD), an organic light emitting diode (OLED), a flexible display, a 3-dimensional (3D) display, and an e-ink display.

Two or more display units 151 may be used according to implementation of the mobile terminal 100. For instance, a plurality of the display units may be arranged on one side of the mobile terminal 100, either spaced apart from each other or integrated, or these display units may be arranged on different surfaces of the mobile terminal 100.

The display unit 151 may also include a touch sensor which senses a touch input received at the display unit 151 so as to receive a control command in a touching manner. When a touch is input to the display unit 151, the touch sensor may be configured to sense this touch and the controller 180 may generate a control command corresponding to the touch. The content input in the touching manner may be text or numbers, or a menu item which can be indicated or specified in various modes.

The touch sensor may be configured in the form of a film having a touch pattern, disposed between the window 151a and a display (not shown) on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touchscreen together with the touch sensor. Here, the touchscreen may serve as the user input unit 123 (see FIG. 1A). Therefore, the touchscreen may replace at least some of the functions of the first manipulation unit 123a.

The first audio output unit 152a may be implemented in the form of a receiver to deliver telephone conversation to ears of a user, and the second audio output unit 152b may be implemented in the form of a loud speaker to output various alarm sounds, multimedia audio reproduction sounds, and the like.

The window 151a of the display unit 151 may include an audio hole to allow sound generated by the first audio output unit 152a to pass. However, the present invention is not limited thereto and sound may be released along an assembly gap between the structural bodies (for example, a gap between the window 151a and the front case 101). In this case, a hole independently formed to output sound may not be seen or is otherwise hidden in terms of appearance, thereby further simplifying the appearance of the mobile terminal 100.

The optical output unit 154 can be configured to output light for indicating event generation. Examples of such events include message reception, call signal reception, a missed call, an alarm, a schedule notice, email reception, information reception through an application, and the like. When a user has checked a generated event, the controller 180 can control the optical output unit 154 to stop light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by the user in order to receive a command for controlling operation of the mobile terminal 100. The first and second manipulation units 123a and 123b may also be commonly referred to as a manipulation portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

Although the first manipulation unit 123a is a touch key in this figure, the present invention is not limited thereto. For example, the first manipulation unit 123a may include a push key (mechanical key) or a combination of a push key and a touch key.

Input received at the first and second manipulation units 123a and 123b may be used in various ways. For example, the first manipulation unit 123a may receive commands such as a menu, home key, cancel, search, or the like, and the second manipulation unit 123b may receive commands for controlling a volume level output from the first and second audio output units 152a and 152b and switching a touch recognition mode of the display unit 151.

As another example of the user input unit 123, a rear input unit (not shown) may be located on the rear surface of the terminal body. The rear input unit can be manipulated by a user to receive commands for controlling operation of the mobile terminal 100. The received commands may be set in a variety of different ways. For example, a command such as power on/off, start, end or scroll, a command for controlling a volume level output from the first and second audio output units 152a and 152b, a command for switching to a touch recognition mode of the display unit 151, and the like may be received. The rear input unit may be configured to permit touch input, push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate the same using a forefinger when the user grabs the terminal body with one hand. The present invention is not limited thereto and the position of the rear input unit may be changed.

If the rear input unit is provided located on the rear surface of the terminal body, a new user interface using the same may be implemented. In addition, the above-described touchscreen or rear input unit may replace at least some of the functions of the first manipulation unit 123a located on the front surface of the terminal body. As such, if the first manipulation unit 123a is not located on the front surface of the terminal body, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may be embedded in the display unit 151 or the user input unit 123.

The microphone 122 receives user's voice or the other sounds. If desired, multiple microphones 122 may be provided to receive stereo sound.

The interface unit 160 may serve as an interface between the mobile terminal 100 and external devices. For example, the interface unit 160 may include at least one among a connection terminal for connecting to another device (for example, an earphone, an external speaker, or the like), a port for near field communication (for example, an Infrared Data Association (IrDA) port, a Bluetooth port, a wireless LAN port, and the like), and a power supply terminal for supplying power to the mobile terminal 100. The interface unit 160 may be implemented in the form of a socket for accommodating an external card, such as a Subscriber Identity Module (SIM), a User Identity Module (UIM), or a memory card for information storage.

The second camera 121b may be located at the rear side of the terminal body. In this case, the second camera 121b may capture images in a direction that is substantially opposite to that of the first camera unit 121a.

The second camera 121b may include a plurality of lenses arranged along at least one line. The plurality of lenses may also be arranged in a matrix. The cameras may be referred to as an "array camera." When the second camera 121b is implemented as an array camera, images may be captured in various manners using the plurality of lenses, and images with better quality may be acquired.

A flash 124 may be provided adjacent to the second camera 121b. When an image of a subject is captured with the camera 121b, the flash 124 may illuminate the subject.

The second audio output unit 152b may be further located on the terminal body. The second audio output unit 152b may implement stereophonic sound functions in conjunction with the first audio output unit 152a, and may be also used to implement a speakerphone mode for call communication.

At least one antenna for wireless communication may be located on the terminal body. The antenna may be installed in the terminal body or formed in the case. For example, an antenna which configures a part of the broadcast receiving module 111 (see FIG. 1A) may be retractable into the terminal body. Alternatively, an antenna may be formed in a film shape to be attached to an inner surface of the rear cover 103, or a case including a conductive material may function as an antenna.

The terminal body includes a power supply (190; see FIG. 1A) for supplying power to the mobile terminal 100. The power supply 190 may include a battery 191, which is mounted in the terminal body or detachably coupled to the outside of the terminal body.

The battery 191 may receive power via a power source cable connected to the interface unit 160. Also, the battery 191 can be recharged in a wireless manner using a wireless charger. Wireless charging may be implemented by magnetic induction or resonance (magnetic resonance).

In the figures, the rear cover 103 is coupled to the rear case 102 to shield the battery 191, to prevent separation of the battery 191, and to protect the battery 191 from external impact or from foreign materials. When the battery 191 is detachable from the terminal body, the rear case 103 may be detachably coupled to the rear case 102.

An accessory for protecting the mobile terminal 100 or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the functionality of the mobile terminal 100. Another example of the accessory is a touch pen for assisting or extending touch input to a touchscreen.

Hereinafter, embodiments related to a control method that can be implemented on the thus-constructed mobile terminal 100 will be described with reference to the attached drawings. The present invention is apparent to those skilled in the art that may be embodied in other specific forms without departing from the spirit and essential characteristics of the invention.

When the display unit 151 becomes inactive or a preset condition is met, such as when no user touch input is sensed for a certain period of time or longer, the controller 180 of the mobile terminal 100 according to an embodiment of the present invention may switch the mobile terminal 100 to a locked state. Here, the "locked state" may refer to "a state in which at least one of the functions available on the mobile terminal 100 according to an embodiment of the present invention is restricted".

When switched to the locked state, the controller 180 of the mobile terminal 100 according to an embodiment of the present invention may sense a user's input for releasing the locked state.

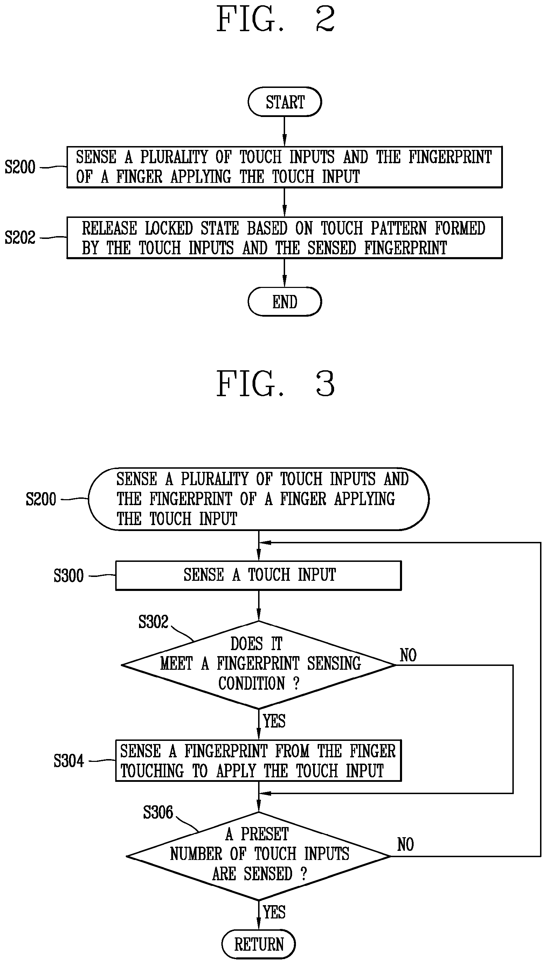

FIG. 2 is a flowchart showing an operation process for releasing the locked state based on a touch input applied from the user, when the mobile terminal 100 related to the present invention is switched to the locked state.

Referring to FIG. 2, the controller 180 may sense a plurality of touch inputs applied on the display unit 151 to release the locked state. Here, the controller 180 may sense the fingerprint of a finger applying at least some of the touch inputs when sensing the at least some of the touch inputs (S200). For example, in the step S200, the controller 180 may sense the fingerprint of a finger applying the first or last one of the touch inputs or sense the fingerprint of a finger applying at least one of the touch inputs except the first and last ones.

Meanwhile, it is needless to say that, in the step S200, the controller 180 may indicate on the display 151 whether a fingerprint has been sensed or not. That is, in the case of a touch input from which a fingerprint has been sensed, the controller 180 may display one point on the display unit 151 at which the touch input is applied in such a way that it can be distinguished from a point on the display unit 151 at which another touch input is applied. In an example, the controller 180 may display a graphical object corresponding to the sensed fingerprint at the touch input point on the display unit 151 where the fingerprint has been sensed, so that the touch input position from which the fingerprint has been sensed can be identified.

Among the plurality of touch inputs, the controller 180 may sense a fingerprint from a touch input that is distinguishable from other touch inputs. That is, the controller 180 may sense the fingerprint of a finger applying a touch input on the display unit 151 as long as the touch input meets a preset condition. In this case, the controller 180 may indicate on the display unit 151 whether a current touch input meets a preset condition or not. Accordingly, the user may recognize the position of a touch input from which a fingerprint has been sensed and whether the fingerprint has been sensed or not. An operation process for sensing the fingerprint of a user's finger touching the display unit 151 to apply the current touch input, depending on whether the touch input meets a preset condition or not, will be described in more details with reference to FIG. 3 below.

Meanwhile, in the step S200, when a plurality of touch inputs and the fingerprint of at least one of the touch inputs are sensed, the controller 180 may unlock the mobile terminal 100 based on a touch pattern formed by the touch inputs and the at least one sensed fingerprint (S202). That is, in the step S202, the controller 180 may use a preset touch pattern and fingerprint information formed by the at least one fingerprint in order to unlock the mobile terminal 100.

In an example, in the step S202, the controller 180 may release the locked state only when the touch pattern and the fingerprint information match a registered touch pattern and registered fingerprint information, respectively. Here, the fingerprint information may include a plurality of fingerprints of different fingers. Alternatively, the fingerprint information may include at least either the point in time at which the fingerprint is sensed during application of the touch pattern or the sensed position of the fingerprint on the display unit 151.

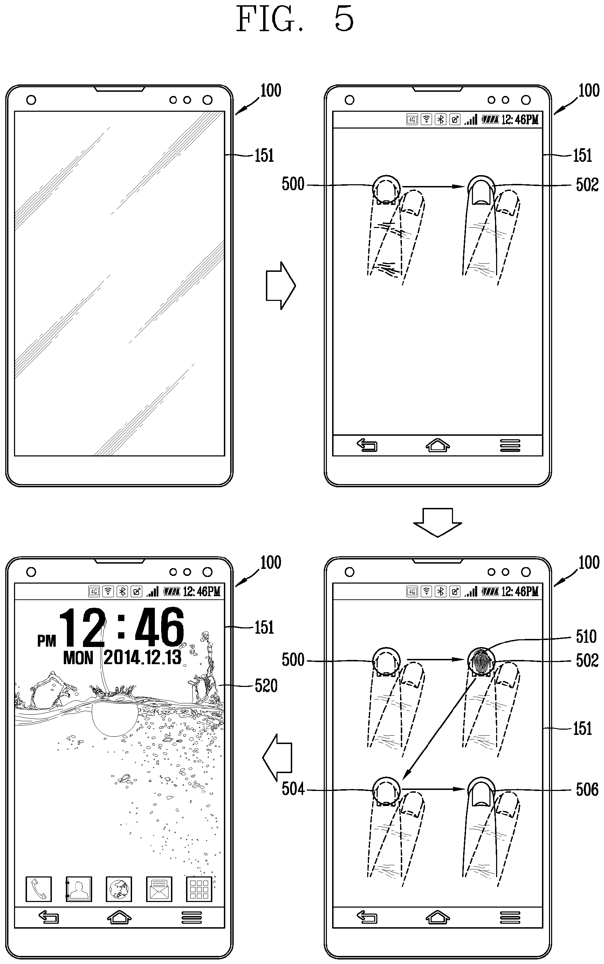

In this case, the controller 180 may unlock the mobile terminal 100 only when the fingerprint, at least either the point in time at which the fingerprint is sensed during application of the touch pattern or the sensed position of the fingerprint on the display unit 151, and the touch pattern all match the registered ones. An example of unlocking the mobile terminal 100 based on a touch pattern formed by a plurality of touch inputs and a user's finger applying some of the touch inputs will be described in more detail with reference to FIG. 5 below.

Meanwhile, in the step S202, the controller 180 may unlock the mobile terminal 100 when only the touch pattern matches the registered one, as well as when both the fingerprint information and the touch pattern match the registered ones. However, when only the touch pattern matches the registered one, the mobile terminal 100 may be unlocked but with a specific function restricted. That is, when only the touch pattern matches the registered one, the controller 180, the controller 180 may switch the mobile terminal 100 from the locked state, in which "reception of control commands from the user is restricted" to an operating state in which control commands from the user are received but some of functions executable in response to the control commands are restricted.

The functions restricted in the "operating state triggered when only the touch pattern matches the registered one" may be functions requiring additional user authentication. That is, these functions include payment functions, functions related to the user's personal information, that is, information about the user's identity, such as name, address, and phone number, functions related to messages, call logs, and photo viewing, or functions related to information with more than a certain level of security set by the user.

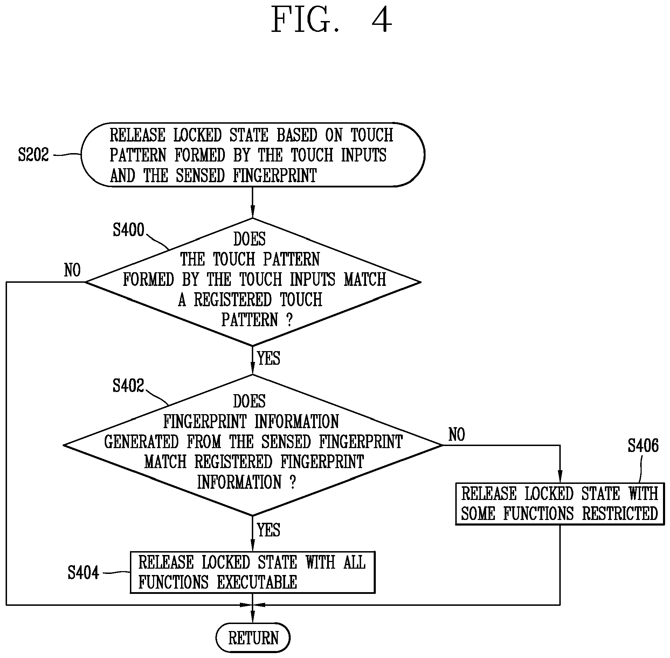

On the other hand, when both the touch pattern and the fingerprint information match the registered ones, the controller 180 may switch the mobile terminal 100 from the locked state to an operating state in which all executable functions can be performed. An operation process for switching the mobile terminal 100 from the locked state to different operating states depending on whether a touch pattern and fingerprint information match preset information or not will be described in more details with reference to FIG. 4 below.

As mentioned above, the fingerprint information may include a plurality of fingerprints of different fingers, or may include at least either information about the point in time at which the fingerprint is sensed during application of the touch pattern or information about the sensed position of the fingerprint on the display unit 151. In this case, the controller 180 may have the mobile terminal 100 operate in different operating states if part of the fingerprint information is different.

That is, if the touch pattern formed by a plurality of touch inputs and the fingerprint information match registered information, the controller 180 may switch the mobile terminal 100 from the locked state to an operating state corresponding to the user's finger matching the sensed fingerprint. In this case, the mobile terminal 100 may be switched to different operating states depending on the finger that has applied the touch input corresponding to the fingerprint.

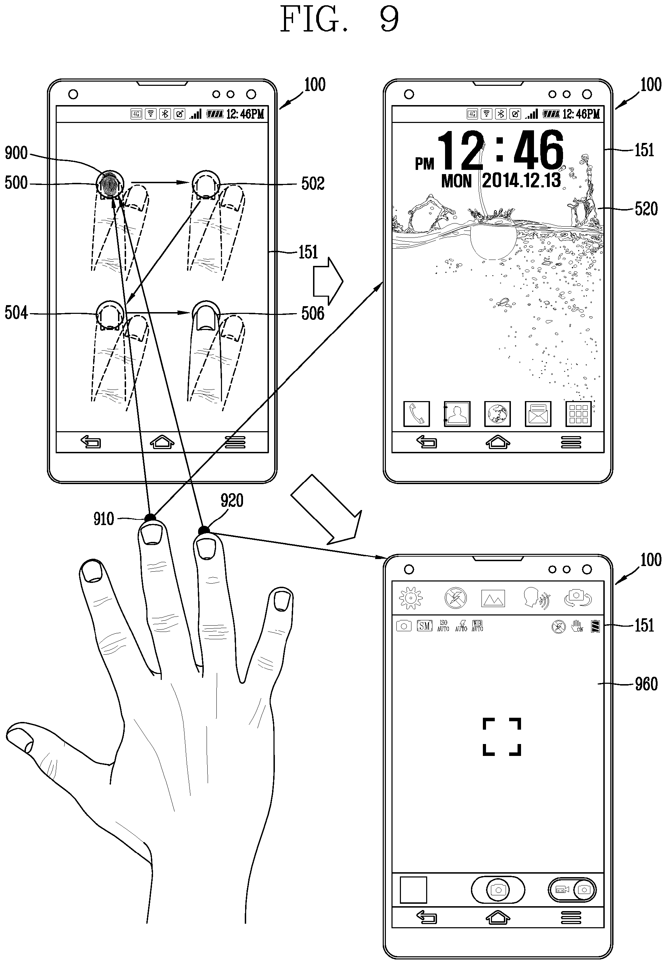

Besides, the controller 180 may switch the operating state of the mobile terminal 100, based on at least either the point in time at which the touch input is applied or the point on the display unit 151 where the touch input is applied, as well as the user's finger. That is, even when the user applies a touch input with one finger, the controller 180 may switch the mobile terminal 100 from the locked state to a particular operating state if at least either the point in time at which a touch input corresponding to the sensed fingerprint is applied during application of the touch pattern or the point on the display unit 151 where the fingerprint is sensed does not match registered information. Also, different points in time at which the fingerprint is sensed or different points on the display unit 151 where the fingerprint is sensed may correspond to different operating states of the mobile terminal 100, respectively. Now, referring to FIGS. 9 to 11 below, a more detailed description will be given of an example in which the mobile terminal 100 is switched to a particular operating state, based on one of the following: the finger matching the sensed fingerprint; the point in time at which the fingerprint is sensed during application of the touch pattern; and the point on the display unit 151 where the fingerprint is sensed.

FIG. 3 shows an operation process for sensing a plurality of touch inputs and fingerprints during the operation process of FIG. 2, which shows in more detail a process of sensing a fingerprint depending on whether a touch input meets a preset condition or not.

Referring to FIG. 3, when a touch input from the user's finger is given on the display unit 151, the controller 180 of the mobile terminal 100 according to an embodiment of the present invention may sense it (S300). In this state, the controller 180 may determine whether the touch input meets a preset fingerprint sensing condition or not (S302).

Here, the preset fingerprint sensing condition may refer to sensing a fingerprint from a touch input applied on the display unit 151. That is, in the step S302, the controller 180 may determine whether a touch input sensed in the step S300 is maintained for a certain period of time or longer or whether the touch input is applied with more than a certain amount of pressure. Alternatively, in the step S302, the controller 180 may determine whether the area of contact between the display unit 151 and the user's finger is larger than a certain size.

Also, the controller 180 may sense a fingerprint matching the touch input sensed in the step S300, only when the fingerprint sensing condition of the step S302 is met (S304). That is, the controller 180 may sense the fingerprint of the user's finger touch the display unit 151 to apply the touch input, only when the fingerprint sensing condition is met.

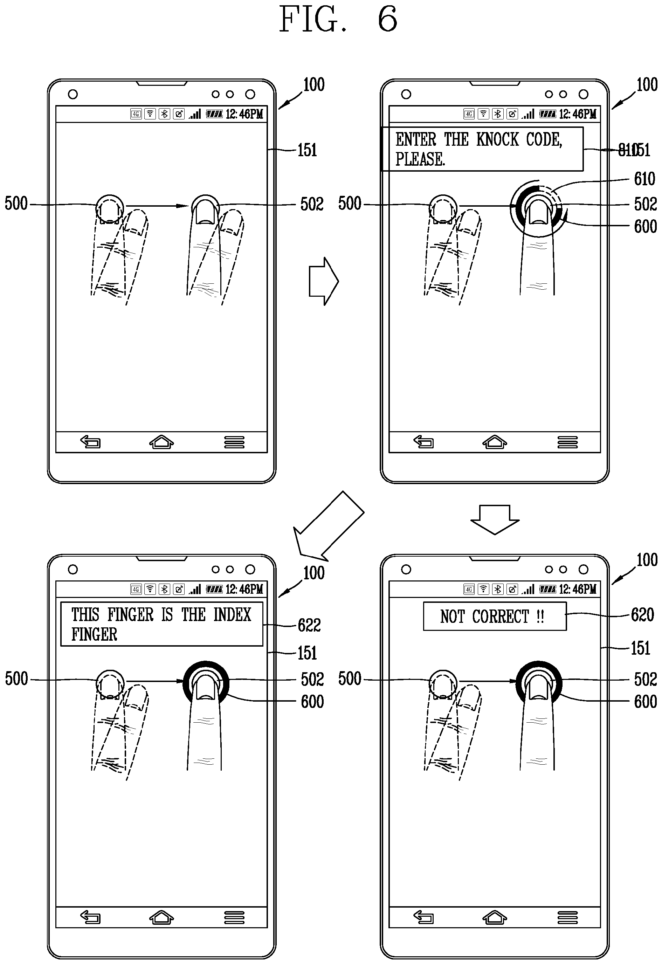

Meanwhile, when a touch input is applied on the display unit 151, the controller 180 may indicate on the display unit 151 whether the applied touch input meets the fingerprint sensing condition or not. That is, the controller 180 may display on the display unit 151 information relating to the length of time, pressure, or contact area of the touch input currently applied on the display unit 151, so that the user can choose to have a fingerprint sensed at the point in time at which the current touch input is applied or to have a fingerprint sensed from the point on the display unit 151 where the current touch input is applied. An example of indicating on the display unit 151 whether the applied touch input meets a fingerprint sensing condition or not will be described in more detail with reference to FIG. 6 below.

If a fingerprint is sensed in the step S304 or the touch input in the step S300 does not meet a preset fingerprint sensing condition, the controller 180 may determine whether a preset number of touch inputs are sensed or not (S306). Here, the preset number may be the number of touch inputs forming a registered touch pattern.

If the result of the determination in the step S306 shows that the preset number of touch inputs are not sensed, the controller 180 may go back to the step S300 and repeat the steps S302 to S306. On the other hand, if the result of the determination in the step S306 shows that the preset number of touch inputs are sensed, the controller 180 may go to the step S202 of FIG. 2 to unlock the mobile terminal 100 based on a touch pattern formed by a plurality of touch inputs applied so far and at least one fingerprint sensed during application of the touch inputs.

As mentioned in the above description, the mobile terminal 100 according to an embodiment of the present invention may be unlocked even when only the touch pattern matches the registered one, as well as when both the fingerprint information and the touch pattern match the registered ones. FIG. 4 shows in more detail an operation process for unlocking the mobile terminal based on a plurality of touch inputs and a sensed fingerprint.

Referring to FIG. 4, in the step S200 of FIG. 2, the controller 180 of the mobile terminal according to an embodiment of the present invention may unlock the mobile terminal 100 based on a plurality of touch inputs and a fingerprint sensed when at least some of the touch inputs is applied. To this end, the controller 180 may first compare a touch pattern formed by the touch inputs with a registered touch pattern (S400).

If the result of the comparison in the step S400 shows that the touch pattern formed by the touch inputs and the registered touch pattern do not match, the controller 180 may immediately terminate the current operation process. That is, if the touch pattern does not match the registered one, the controller 180 may determine that a wrong touch pattern has been applied and maintain the current state, i.e., locked state, of the mobile terminal 100. It is needless to say that, when a wrong touch pattern is applied, the controller 180 may display information about this or a graphical object on the display unit 151.

If the result of the comparison in the step S400 shows that the touch pattern formed by the touch inputs and the registered touch pattern match, the controller 180 may compare fingerprint information generated from the sensed fingerprint with registered fingerprint information (S402). Then, the controller 180 may switch the mobile terminal 100 from the locked state to different operating states depending on the result of the determination in the step S402.

That is, if the result of the determination in the step S402 shows that the fingerprint information generated from the sensed fingerprint and the registered fingerprint information do not match each other, the controller 180 may switch the mobile terminal 100 to an operating state (first operating state) in which some functions are restricted (S406). Here, some functions restricted in the first operating state may be functions related to information requiring additional authentication, such as the user's personal information.

On the contrary, if the result of the determination in the step S402 shows that the fingerprint information generated from the sensed fingerprint and the registered fingerprint information match, the controller 180 may switch the mobile terminal 100 from the locked state to an operating state (second operating state) in which all functions can be executed (S404).

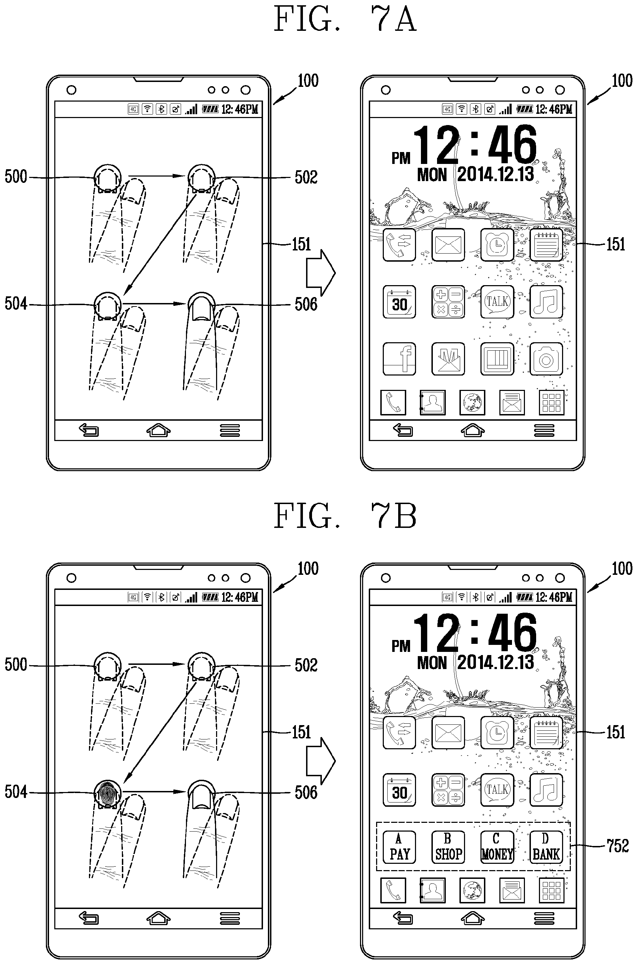

These transitions of operating state may be made in the form of a user interface. That is, the controller 180 may provide different user interfaces depending on whether only the touch pattern matches the registered one or both the touch pattern and the fingerprint information match the registered ones. In this case, the user interface (first user interface) provided when only the touch pattern matches the registered one may not include graphical objects associated with the execution of the restricted functions, unlike the user interface (second user interface) provided when both the touch pattern and the fingerprint information match the registered ones. An example of providing different user interfaces depending on whether only the touch pattern matches the registered one or both the touch pattern and the fingerprint information match the registered ones will be described in more details with reference to FIGS. 7A and 7B below.

As described above, the fingerprint information may include at least one of the following: a sensed fingerprint; the point in time at which a touch input corresponding to the fingerprint is applied, among the plurality of touch inputs for forming a touch pattern; and the sensed position of the fingerprint. Also, different operating states may be preset on the mobile terminal 100 according to an embodiment of the present invention, depending on a sensed fingerprint, the point in time at which a touch input corresponding to the fingerprint is applied, and the position on the display unit 151 where the fingerprint is sensed.

Accordingly, in the step S404, the mobile terminal 100 may be switched to a particular operating state corresponding to one of a plurality of registered fingerprints for different operating states of the mobile terminal 100 that corresponds to the fingerprint sensed in the step S200 of FIG. 2. Thus, the controller 180 may switch the mobile terminal 100 immediately from the locked state to a particular operating state corresponding to a particular finger applying a particular touch input, the point in time at which the particular touch input forming a touch pattern is applied, and the position on the display unit 151 where the fingerprint is applied.

In the above description, an operation process for unlocking the mobile terminal 100 according to an embodiment of the present invention, based on a plurality of touch inputs and a fingerprint sensed from at least some of the touch inputs, has been described in detail.

In the description below, an example of unlocking the mobile terminal 100 according to an embodiment of the present invention and examples of switching the mobile terminal 100 into a particular operating state based on generated fingerprint information will be described in more detail with reference to illustrative drawings. Moreover, in the present invention, a description will be given of an example in which a fingerprint is sensed when some of touch inputs forming a touch pattern are applied. Needless to say, the present invention is not limited to this, and the fingerprint of a finger applying each touch input may be sensed upon application of each touch input forming a touch pattern, and the mobile terminal 100 may be unlocked based on sensed fingerprints and a formed touch pattern.

FIG. 5 is an illustration of an exemplary process for unlocking a mobile terminal according to an embodiment of the present invention.

Referring to FIG. 5, the first image of FIG. 5 shows the mobile terminal 100 according to an embodiment in a locked state. In the locked state, the display unit 151 of the mobile terminal 100 may be in doze mode.

Meanwhile, as shown in the second image of FIG. 5, when first and second touch inputs are sequentially applied to first and second points 500 and 502 on the display unit 151, the controller 180 may sense them. In this state, the controller 180 may sense the fingerprint of a finger touching the second point 502 to apply the second touch input, based on the state of the touch input at the second point 502.

In this case, the point (second point) 502 where the fingerprint is sensed may be displayed in such a way that it can be distinguished from other points where touch inputs are sensed. That is, as shown in the third image of FIG. 5, a graphical object 510 corresponding to the sensed fingerprint may be displayed at the point (second point) 502 where the fingerprint is sensed. Accordingly, as shown in the third image of FIG. 5, different points on the display unit 151 where touch inputs are applied - that is, a first point 500, a third point 504, a fourth point 506, and the point (second point) 502 where the fingerprint is sensed - may be distinguished from one another.

Meanwhile, as shown in the third image of FIG. 5, when a preset number of touch inputs are applied, the controller 180 may unlock the mobile terminal 100 based on a touch pattern formed by the touch inputs and a fingerprint sensed from the second point 502. In this case, the controller 180 may unlock the mobile terminal 100, based on at least either the point in time at which a touch input is applied at the second point 502, among the plurality of touch inputs, or the position on the display unit 151 where the fingerprint is sensed, as well as based on whether the fingerprint sensed from the second point 502 is a registered fingerprint or not.

That is, the controller 180 may unlock the mobile terminal 100 by further determining whether an area on the display unit 151 corresponding to the point, i.e., second point 502, on the display unit 151 where the fingerprint is sensed is a registered area or not. Alternatively, the controller 180 may unlock the mobile terminal 100 by further determining the point in time at which a touch input corresponding to the sensed fingerprint is applied - that is, the ordinal position of the touch input from which the fingerprint is sensed in a registered sequence of touch inputs forming a touch pattern.

That is, as shown in FIG. 5, apart from the comparison result of the fingerprint sensed from the second point 502, at least either the position of the second point 502 on the display unit 151 where the fingerprint is sensed or the ordinal position of the touch input corresponding to the sensed fingerprint (that is, the second touch input of the touch pattern formed by four touch inputs) should match a registered one, in order that the mobile terminal 100 can be unlocked as shown in the fourth image of FIG. 5.

Meanwhile, as described above, the controller 180 of the mobile terminal 100 according to an embodiment of the present invention may indicate on the display unit 151 information relating to how the current touch input is being applied. This is for allowing the user to choose whether to have their fingerprint sensed at the position of the current touch input by making the user identify how the current touch input is being applied. FIG. 6 shows an example of this.

Referring to FIG. 6, the first image of FIG. 6 shows an example in which a touch input (second touch input) is being applied to the second point 502 following the first point 500, as shown in the second image of FIG. 5.

In this case, the controller 180 may display a graphical object 600 around the second point 502 to show how the second touch input is currently being applied. For example, the graphical object 600 may be displayed in an area 610 around the second point 502, as shown in the second image of FIG. 6.

Moreover, the graphical object 600 may display the length of time the second touch input is applied on the display unit 151, the pressure of the second touch input on the display unit 151, or the size of the contact surface the user's finger touches on the display unit 151 to apply the second touch input.

Accordingly, the controller 180 may display the graphical object 600 differently depending on how the second touch input is being applied. That is, in a case where the graphical object 600 is displaying the length of time the second touch input is applied, the controller 180 may display the graphical object 600 in such a way that the area 610 around the second point 502 becomes bigger and more distinct from other areas on the display unit 151 as the length of time the second touch input is applied increases, as shown in the second image of FIG. 6.

Moreover, if the second touch input is applied for longer than a preset period of time, the controller 180 may display the graphical object 600 in such a way that the entire area 610 is distinct from other areas on the display unit 151. Also, the controller 180 may determine that the second touch input meets a preset fingerprint sensing condition, and therefore may sense the fingerprint of the user's finger touching the display unit 151 to apply the second touch input.

Similarly, in a case where the graphical object 600 shows the pressure of the second touch input or the size of the contact surface the user's finger touches to apply the second touch input, the controller 180 may display the graphical object 600 in the area 610 differently depending on how the pressure or the size of the contact surface changes.

If the second touch input is applied with more than a certain amount of pressure or the area of contact between the display unit 151 and the user's finger is larger than a certain size, the controller 180 may display the graphical object 600 in such a way that the entire area 610 is distinct from other areas on the display unit 151. Also, the controller 180 may determine that the second touch input meets a preset fingerprint sensing condition, and therefore may sense the fingerprint of the user's finger touching the display unit 151 to apply the second touch input. Needless to say, although the second image of FIG. 6 shows an example in which the graphical object 600 is displayed in such a way that the area 610 becomes bigger and more distinct from other areas over time, its size or shape may vary depending on the length of time the sensed finger of the user touches or the contact area or depending on the pressure applied from the finger. Also, it is possible to display whether a preset fingerprint sensing condition is met based on at least either the varying size or shape.

Needless to say, once a fingerprint is sensed in this way, the controller 180 may display on the display unit 151 information relating to the sensed fingerprint. The third and fourth images of FIG. 6 show an example of this.

For example, if there is no registered fingerprint matching the sensed fingerprint in the second image of FIG. 6, the controller 180 may display on the display unit 151 that there is no matching registered fingerprint. That is, as shown in the third image of FIG. 6, the controller 180 may display on the display unit 151 a graphical object 620 for indicating that there is no matching fingerprint, so that the user can recognize that the currently inputted fingerprint is not correct.

Meanwhile, upon sensing a fingerprint, the controller 180 may display on the display unit 151 information about the finger matching the sensed fingerprint. That is, the controller 180 may detect information about the finger matching the sensed finger in the second image of FIG. 6, based on information about a plurality of registered fingerprints of different fingers. Also, as shown in the fourth image of FIG. 6, a graphical object 622 containing the detected information may be displayed in at least part of the display unit 151.

Accordingly, in the present invention, if a fingerprint is sensed, the user may recognize information about the finger matching the sensed fingerprint. Hence, in the present invention, even when there is a fingerprint matching the sensed fingerprint, the user may recognize if this fingerprint is the fingerprint of a finger preset by the user or not.

Needless to say, although the third and fourth images of FIG. 6 illustrate an example in which information relating to the fingerprint is displayed by a graphical object with a text string, graphical objects of more diverse shapes may be displayed in more diverse ways. For instance, in order to indicate that input fingerprint information is not correct as shown in the third image of FIG. 3, either the entire display unit 151 or part of it may be changed to a different color, or a means such as LED may be used.

Needless to say, a finger-like graphical object may be used to indicate information about a finger associated with an input fingerprint, as shown in the fourth image of FIG. 6. In this case, an area corresponding to the finger matching the currently sensed fingerprint on the display unit 151 displaying the finger-like graphical object may be displayed in such a way as to be distinguished from other areas on the display unit 151 displaying the finger-like graphical object.

FIGS. 7A and 7B are illustrations of examples in which different user interfaces are provided depending on whether there is a fingerprint input or not, in a mobile terminal according to an embodiment of the present invention.

Referring to FIG. 7A, it is assumed that no fingerprint is sensed during application of touch inputs forming a touch pattern. That is, as shown in the first image of FIG. 7A, if no fingerprint is sensed from the touch inputs while the touch inputs are sequentially applied to a first point 500, a second point 502, a third point 504, and a fourth point 506, the controller 180 may only compare the touch pattern formed by the touch inputs with a registered touch pattern. If the touch pattern matches the registered touch pattern, the controller 180 may unlock the mobile terminal 100 and control the display unit 151 to display a screen of a user interface (first user interface) corresponding to when only the touch pattern matches the registered one. As described previously, the first user interface may be a user interface containing no graphical objects associated with the execution of some restricted functions. Also, the some restricted functions may be functions that require a higher level of security, including functions requiring additional user authentication (e.g., payment functions) or functions related to viewing the user's personal information such as messages or photos. The second image of FIG. 7A shows an example of a first user interface screen 700 containing no graphical objects associated with the execution of some restricted functions.

On the contrary, FIG. 7B shows an example in which a fingerprint is sensed simultaneously with at least one of a plurality of touch inputs forming a touch pattern.

Referring to the first image of FIG. 7B, a fingerprint is sensed simultaneously with a touch input applied to the third point 504 when touch inputs are sequentially applied to a first point 500, a second point 502, a third point 504, and a fourth point 506. In this case, the controller 180 may unlock the mobile terminal 100 by using fingerprint information generated from the fingerprint, as well as a touch pattern formed by the touch inputs. Here, the fingerprint information may further include at least either the position on the display unit 151 where the fingerprint is sensed or the ordinal position of the touch input from which the fingerprint is sensed, that is, the point in time at which the fingerprint is sensed during application of the touch pattern, as well as the shape of the sensed fingerprint.

Therefore, the controller 180 may determine whether to unlock the mobile terminal 100 or not, not only based on the touch pattern formed by the touch inputs, but also by comparing the fingerprint information, including the shape of the fingerprint, the position on the display unit 151 where the fingerprint is sensed, and the point in time at which the fingerprint is sensed during application of the touch pattern, with registered fingerprint information.

In this case, if the touch pattern matches the registered one but part of the fingerprint information does not match the registered one, the controller 180 may display on the display unit 151 the first user interface screen 700 containing no graphical objects associated with the execution of some restricted functions, as shown in the second image of FIG. 7A.

Meanwhile, if the comparison result shows that both the touch pattern and the fingerprint information match the registered ones, the controller 180 may control the display unit 151 to display a screen of a corresponding user interface (second user interface). Here, the screen of the second user interface may further include graphical objects that are not included in the first user interface screen 700. That is, the second user interface may be a user interface where the some restricted functions - that is, functions that require a higher level of security, including functions requiring additional user authentication (e.g., payment functions) or functions related to viewing the user's personal information such as messages or photos - can be executed when selected by the user. Thus, the second user interface screen may further include graphical objects associated with the execution of payment functions or functions related to viewing the user's personal information such as messages or photos. The second image of FIG. 7B shows an example of the second user interface screen 750. Graphical objects 752 included in the second user interface screen 750 are examples of graphical objects associated with the execution of restricted functions, e.g., payment functions, that are not included in the first user interface screen 700.

The restricted functions may be determined according to the properties of these functions or according to the user's selection. For example, if an application or program installed on the mobile terminal 100 includes a payment function, the controller 180 may classify this application or program as a restricted function.

Alternatively, the controller 180 may classify a specific application or program as a restricted function according to the user's selection. Here, the user's selection may mean that the user sets a higher level of security for the execution of the specific application or program or sets up additional user authentication for it. That is, in a case where the user sets up additional authentication for an application or program associated with viewing messages or photos, the application or program associated with viewing messages or photos may be classified as a restricted function, and therefore a graphical object associated with its execution may be displayed on the display unit 151 only when both a touch pattern and fingerprint information match registered ones.

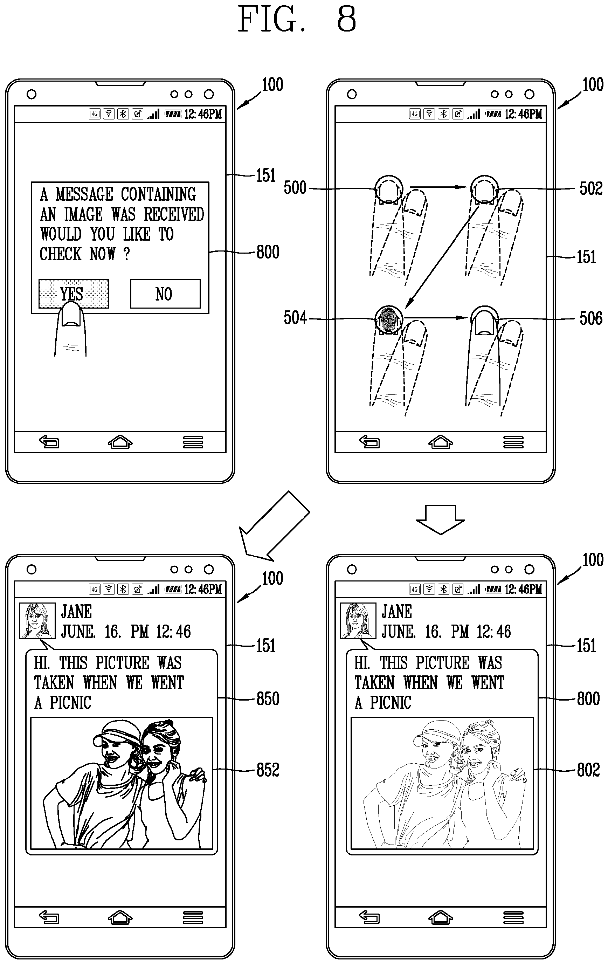

Meanwhile, if an event associated with a restricted function occurs while the mobile terminal 100 is in locked state, the controller 180 of the mobile terminal 100 according to an embodiment of the present invention may display information relating to the event differently depending on whether fingerprint information matches a registered one or not. As described above, the restricted function may be a function associated with viewing the user's personal information such as messages or photos. FIG. 8 shows an example of this, which illustrates that an MMS (multimedia messaging service) message containing an image has been received, with the message viewing function set up as a restricted function.

Referring to the first image of FG. 8, notification information relating to the occurrence of an event is displayed while the mobile terminal 100 according to an embodiment of the present invention is in locked state. That is, as shown in the first image of FIG. 8, upon receiving a message, the controller 180 may display information relating to this, even while the mobile terminal 100 is operating in the locked state. Also, the controller 180 may let the user choose whether to display the content of the received message on the display unit 151 or not.

As shown in the first image of FIG. 8, if the user chooses to display the content of the currently received message, the controller 180 may display on the display unit 151 a screen for releasing the locked state. That is, as shown in the second image of FIG. 8, it is needless to say that the controller 180 may receive a plurality of touch inputs on the display unit 151 from the user and display guidance information 810 for this on the display unit 151.

Accordingly, as shown in the second image of FIG. 8, the controller 180 may receive a plurality of touch inputs at different points on the display unit 151. Also, the fingerprint of at least one of the touch inputs may be sensed simultaneously with the touch input.

Meanwhile, as shown in the second image of FIG. 8, upon sensing a plurality of touch inputs and at least one fingerprint, the controller 180 may compare a touch pattern formed by the touch inputs and fingerprint information generated from the at least one fingerprint with a registered touch pattern and registered fingerprint information, respectively. Also, the controller 180 may display the content of the received message differently depending on whether the touch pattern and the fingerprint information match the registered information.

For instance, if the comparison result shows that the touch pattern does not match the registered one, the controller 180 may not display the content of the message. On the other hand, if the touch pattern matches the registered one but the fingerprint information does not match the registered one - that is, at least a part of the fingerprint information does not match the registered fingerprint information, the controller 180 may restrict the display of at least some of the content of the received message. The third image of FIG. 8 shows an example of this.

Referring to the third image of FIG. 8, while the text contained in the received message is displayed, the image contained in the message is displayed at a certain resolution or lower. That is, if the fingerprint information does not match the registered one, the controller 180 may display the image contained in the received message at a certain resolution or lower or at a certain brightness or lower, or may display only part of it so as to restrict the content of the message displayed on the display unit 151. Alternatively, the text contained in the message also may be restricted by displaying information about the sender of the message only but not the content or by displaying only part of the text.

On the contrary, if the comparison result shows that both the touch pattern and the fingerprint information match the registered information, the controller 180 may display the entire content of a generated event on the display unit 151. That is, as shown in the fourth image of FIG. 8, the controller 180 may display on the display unit 151 the text contained in the received message and the image contained in the message.

Although the above description has been given of an example in which the display of the content of a generated event is restricted even if only part of this information does not match the registered one, it is needless to say that the controller 180 may restrict the display of the content differently depending on which part of the fingerprint information does not match the registered one. That is, as in the example shown in FIG. 8, as long as the shape of the fingerprint matches the registered one, the controller 180 may display the text of the received message only but not the image, and if the shape of the fingerprint and either the point in time at which the touch pattern from which the fingerprint is sensed is applied or the sensed position of the fingerprint match the registered fingerprint information, the controller 180 may display the text and the image, but with some restriction on the image (i.e., the image is displayed at a certain resolution or brightness or lower or only part of the image is displayed), as shown in the third image of FIG. 8.

Alternatively, it is needless to say that the content of an event may be displayed differently depending on which part of the fingerprint information matches the registered one. That is, if the shape of the fingerprint and the point in time at which the fingerprint is sensed match the registered ones, the controller 180 may display the received image at a certain resolution or lower, and if the shape of the fingerprint and the sensed position of the fingerprint match the registered ones, the controller 180 may display only part of the received image.

Meanwhile, fingerprints of a plurality of fingers may be registered on the mobile terminal 100 according to an embodiment of the present invention, and the registered fingerprints may be set to correspond to different operating states of the mobile terminal 100. In this case, when the mobile terminal 100 is in locked state, the controller 180 of the mobile terminal 100 according to an embodiment of the present invention may sense a plurality of touch inputs on the display unit 151, and if a touch pattern and fingerprint information match registered ones, it may switch the mobile terminal 100 from the locked state to a particular operating state corresponding to the user's finger matching the sensed fingerprint. FIG. 9 shows an example of this.

Referring to FIG. 9, the first image of FIG. 9 shows an example in which a plurality of touch inputs are applied at different points on the display unit 151 when the mobile terminal 100 is in locked state. In this case, the controller 180 may switch the mobile terminal 100 immediately from the locked state to a particular operating state corresponding to a sensed fingerprint, based on the shape of the fingerprint sensed during application of the touch inputs. Here, the particular operating state may refer to a state in which a particular one of the functions executable on the mobile terminal 100 is being performed.

For example, as shown in the first image of FIG. 9, if a fingerprint is sensed during application of a touch input at a first point 500, among a plurality of touch inputs on the display unit 151, the controller 180 may switch the mobile terminal 100 to a particular operating state corresponding to the sensed fingerprint. That is, in a case where an operating state for displaying the home screen is specified corresponding to the fingerprint of the index finger of the right hand and an operating state for executing the camera function is specified corresponding to the fingerprint of the ring finger, the controller 180 may switch the mobile terminal 100 to different operating states depending on with which finger the user gives their fingerprint.

That is, if the user applies a plurality of touch inputs and a fingerprint with the middle finger of the right hand, as shown in the first image of FIG. 9, the controller 180 may switch the mobile terminal 100 to an operating state for displaying the home screen 950, as shown in the second image of FIG. 9. On the contrary, if the user applies a plurality of touch inputs and a fingerprint with the ring finger, the controller 180 may switch the mobile terminal 100 to an operating state for executing the camera function, as shown in the third image of FIG. 9.

Although FIG. 9 illustrates an example in which a fingerprint is sensed when one of the touch inputs is applied, it is needless to say that two or more fingerprints may be sensed. Also, it is needless to say that the two or more fingerprints may be fingerprints of different fingers. In this case, the controller 180 may switch the mobile terminal 100 to a particular operating state, based on a fingerprint sensed during application of a particular touch input preset by the user (e.g., a touch input applied at a particular ordinal position in a sequence of a plurality of touch inputs).

While FIG. 9 shows an example in which the mobile terminal 100 is switched to a particular operating state based on a sensed fingerprint, i.e., a fingerprint recognition result, it is needless to say that different operating states may be set depending on the point in time at which the fingerprint is sensed, that is, the ordinal positon of a touch input from which the fingerprint is sensed.

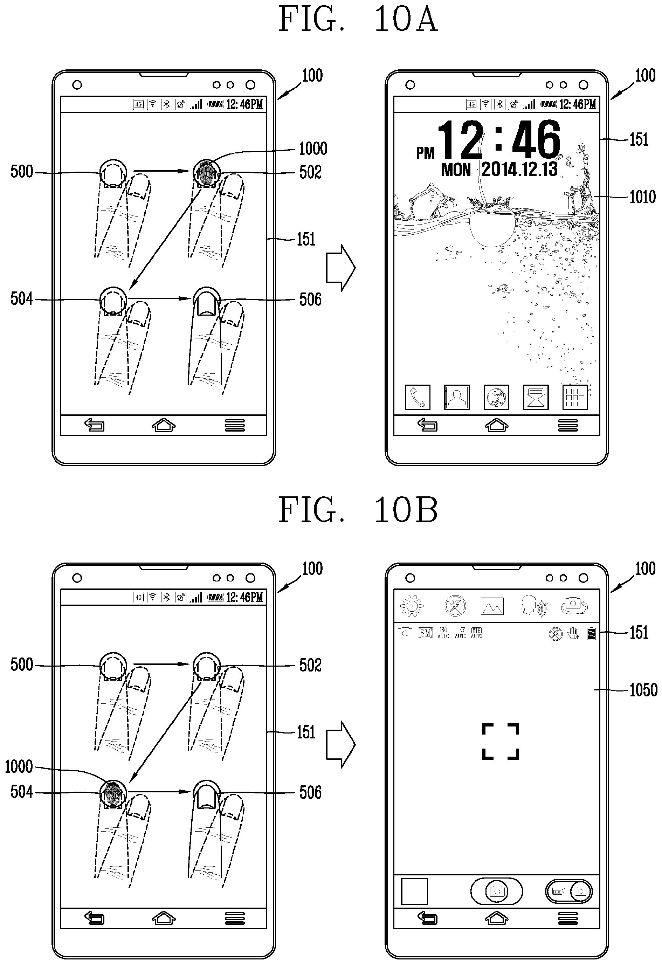

FIGS. 10A and 10B show an example of this. The following description will be given with reference to FIGS. 10A and 10B, assuming that an operating state for displaying the home screen is triggered when a fingerprint is sensed during application of the second touch input, among four touch inputs sequentially applied to different points on the display unit 151, and an operating state for executing the camera function is triggered when a fingerprint is sensed during application of the third touch input.

Referring to FIG. 10A, if a fingerprint is sensed during application of the second touch input, among a plurality of touch inputs, as shown in the first image of FIG. 10A, the controller 180 of the mobile terminal 100 according to an embodiment of the present invention may display an area on the display unit 151 where the touch input from which the fingerprint is sensed is applied in such a way that it can be distinguished from other areas. That is, as shown in the first image of FIG. 10A, the controller 180 may show to the user a touch input from which a fingerprint is currently sensed, by displaying a graphical object corresponding to the sensed fingerprint at the position (second point 502) of the touch input from which the fingerprint is sensed.

Also, when the mobile terminal 100 is unlocked based on a touch pattern and fingerprint information, the controller 180 may switch the mobile terminal 100 from the locked state to a particular operating state, based on a touch input from which the fingerprint is sensed. That is, as assumed above, if the second touch input among a plurality of touch inputs forming a touch pattern corresponds to an operating state for displaying the home screen, the controller 180 may unlock the mobile terminal 100 and at the same time immediately switch it to the operating state for displaying the home screen 1010, upon sensing a fingerprint during application of the second touch input forming the touch pattern, as shown in the first image of FIG. 10A. The second image of FIG. 10A shows an example of this.

On the other hand, if a fingerprint is sensed during application of the third touch input among a plurality of touch inputs, as shown in the first image of FIG. 10B, the controller 180 may switch the mobile terminal 100 to a corresponding particular operating state. That is, as assumed above, if the third touch input among a plurality of touch inputs forming a touch pattern, corresponds to an operating state for executing the camera function, the controller 180 may unlock the mobile terminal 100 and at the same time immediately switch it to the operating state for executing the camera function, based on the touch pattern and the fingerprint information (e.g., the shape of the fingerprint). The second image of FIG. 10B shows an example in which a screen 1050 associated with the camera function is displayed on the display unit 151 when the mobile terminal 100 enters into the operating state for executing the camera function.

That is, the mobile terminal 100 according to an embodiment of the present invention may be set in such a way that different operating states correspond to a plurality of touch inputs forming a touch pattern, respectively. Also, when the mobile terminal 100 is unlocked based on the touch pattern and fingerprint information (e.g., the shape of a fingerprint), the controller 180 may switch the mobile terminal 100 immediately to a particular operating state corresponding to the touch input from which the fingerprint is sensed, among the touch inputs. Accordingly, the present invention can provide improved security features and allow for unlocking the mobile terminal 100 to a particular operating state according to the user's selection.

As mentioned in the above description, in the mobile terminal 100 according to an embodiment of the present invention, fingerprint information may further include the ordinal position of a touch input from which a fingerprint is sensed, among a plurality of touch inputs forming a touch pattern, and the position on the display unit 151 where the fingerprint is sensed, in addition to the shape of the fingerprint. Thus, in the present invention, even if the touch pattern and the shape of the fingerprint match registered ones, whether to unlock the mobile terminal 100 or not may be determined based on the ordinal position of the touch input from which the fingerprint is sensed or the position on the display unit 151 where the fingerprint is sensed.

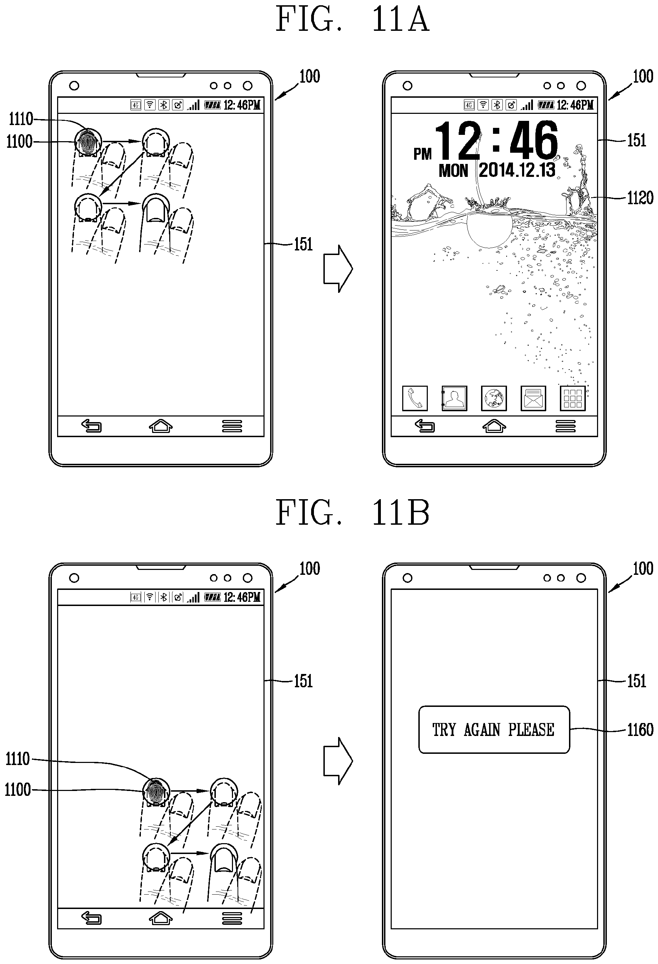

FIGS. 11A and 11B show an example of this. FIG. 11A shows an example in which an area on the display unit 151 where a fingerprint is sensed matches preset fingerprint information, and FIG. 11B shows an example in which an area on the display unit 151 where a fingerprint is sensed does not match preset fingerprint information.

Referring to FIG. 11A, the first image of FIG. 11A shows an example in which a fingerprint is sensed during application of the first touch input, among four touch inputs sequentially applied to different points on the display unit 151. In this case, the controller 180 may display a graphical object 1110 corresponding to the fingerprint at the position on the display unit 151 where the first touch input is applied.

In this case, the controller 180 may compare a touch pattern formed by the touch inputs and the shape of the fingerprint with a registered touch pattern and a registered fingerprint shape. Also, the controller 1870 may detect whether the fingerprint is sensed in an area on the display unit 151 that is preset in the registered fingerprint information. If the detection result shows that the touch pattern and the shape of the fingerprint match the registered ones and the fingerprint is sensed in the preset area on the display unit 151, the mobile terminal 100 may be unlocked, as shown in the second image of FIG. 11A.

In contrast, even if the touch pattern and the shape of the fingerprint match the registered ones, the mobile terminal 100 may not be unlocked unless the fingerprint is sensed in the area on the display unit 151 preset in the registered fingerprint information. That is, as shown in the first image of FIG. 11B, even if the touch pattern formed by the touch inputs is the same and the ordinal position of the touch input from which the fingerprint is sensed is the same, the mobile terminal 100 may not be unlocked.

The second image of FIG. 11B shows an example in which the locked state is not released in relation to the first image of FIG. 11B. If the locked state is not released, the controller 180 may display guidance information 1160 on the display unit 151 to indicate this. Meanwhile, the guidance information 1160 may further include the reason why the current locked state is not released - that is, information indicating that the shape of the fingerprint is not a registered fingerprint, information indicating that a fingerprint is applied with a finger other than the one the user set to use, or information indicating that the sensed position of the fingerprint is not correct. Such guidance information may further include at least one graphical object, as well as the text shown in the second image of FIG. 11B.

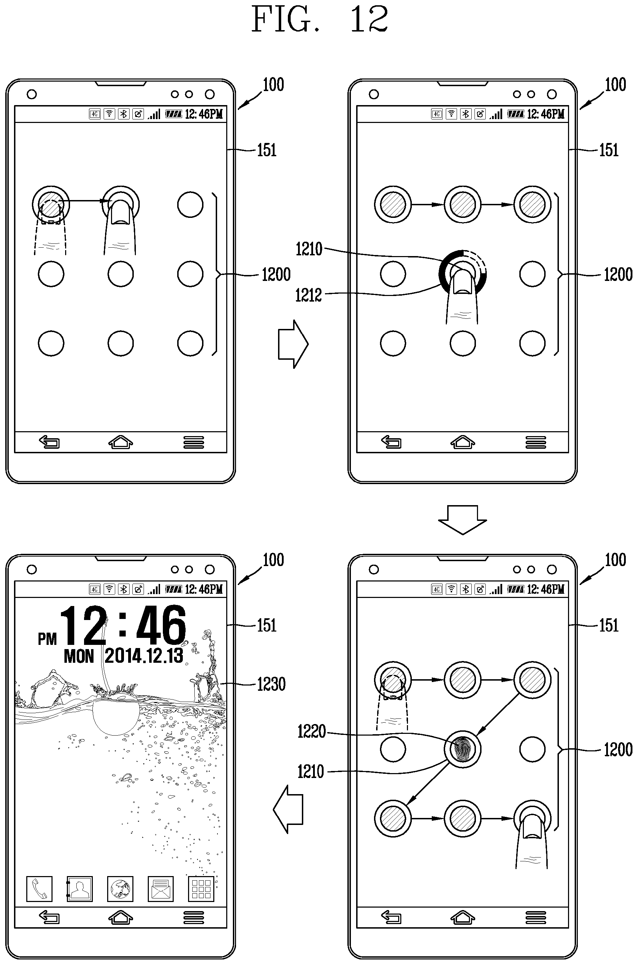

Although the above description has been given of an example in which a plurality of touch inputs for forming a preset touch pattern are applied, it is needless to say that the present invention is also applicable when a locked state is released by at least one touch input and a drag applied to the touch input, as with a lock pattern. FIG. 12 is an illustration of an example in which, when at least one touch input and a drag applied to the touch input are used to unlock the mobile terminal, as with a lock pattern, the locked state is released based on a fingerprint sensed during application of the drag.

Referring to FIG. 12, the first image of FIG. 12 shows an example in which, when the mobile terminal 100 is unlocked based on a touch input and a drag, guidance information 1200 relating to the drag input is displayed. That is, in the case of a lock pattern, for example, guidance information 1200 relating to the lock pattern may be displayed, as shown in the first image of FIG. 12.

In this case, the controller 180 may sense a touch input and a drag input applied on the display unit 151. Also, as shown in the second image of FIG. 12, a fingerprint may be sensed from the user's finger touching for a drag input while the drag input is being applied. In this case, the controller 180 may display information showing how the touch input is being applied at the point touched with the user's finger.

That is, as shown in the second image of FIG. 12, the controller 180 may display on the display unit 151 whether the touch input applied with the user's finger during application of the drag input meets a preset fingerprint sensing condition or not. In this case, the touch input state may be indicated by a graphical object 1212 displayed around a point 1210 on the display unit 151 currently touched with the user's finger.

Here, the fingerprint sensing condition may be a preset period of time, a preset amount of pressure, or the size of the contact surface of the user's finger, as described previously. In this case, the controller 180 may display through the graphical object 1212 whether the user's finger touching the point 1210 meets the fingerprint sensing condition or not. That is, the graphical object 1210 may vary depending on the length of time the user's finger touches the point 1210, the pressure of the user's finger, or the area of contact between the display unit 151 and the user's finger.

Therefore, the controller 180 may let the user choose the point where the user will put a fingerprint during application of the drag input. That is, if the fingerprint sensing condition is to touch a point for a certain period of time, the controller 180 may display the length of time the user's finger touches the point 1210 by using the graphical object 1212. Accordingly, the user may choose whether to have a fingerprint sensed at the point 1210 or not by touching the point 1210 with a finger for a certain period of time or moving the finger within that period of time.

Meanwhile, upon sensing a fingerprint at the point 1210, the controller 180 may display a position corresponding to the sensed fingerprint on the trajectory of the drag input. That is, as shown in the third image of FIG. 12, a graphical object 1220 corresponding to the sensed fingerprint is displayed at the sensed position of the fingerprint on the trajectory of the drag input so that the point 1210 where the fingerprint is sensed can be distinguished.

Meanwhile, when a drag input is applied as shown in the third image of FIG. 12, the controller 180 may unlock the mobile terminal 100, as shown in the fourth image of FIG. 12, based on the trajectory of the drag input and the fingerprint sensed during application of the drag input. Needless to say, the controller 180 may use the position on the display unit 151 where the fingerprint is sensed or the point in time at which the fingerprint is sensed, as well as the shape of the fingerprint, in order to unlock the mobile terminal 100.

Moreover, in a case where different particular operating states of the mobile terminal 100 are specified depending on the user's finger matching the fingerprint, that is, the user's finger applying the drag input, or depending on the position on the display unit 151 or point in time where the fingerprint is sensed, the controller 180 may switch the mobile terminal 100 to a particular operating state immediately as soon as it releases the locked state.

Although the above description has been given of an example in which a fingerprint is sensed when any one of a plurality of touch inputs forming a touch pattern is applied, it is needless to say that each fingerprint may be sensed for each touch input. Also, the fingerprints may correspond to different fingers of the user. In this case, the controller 180 may unlock the mobile terminal 100 or switch the mobile terminal 100 to a particular operating state, based on the comparison result of each fingerprint and the point in time at which each fingerprint is sensed, i.e., the ordinal position of a touch input corresponding to each fingerprint.

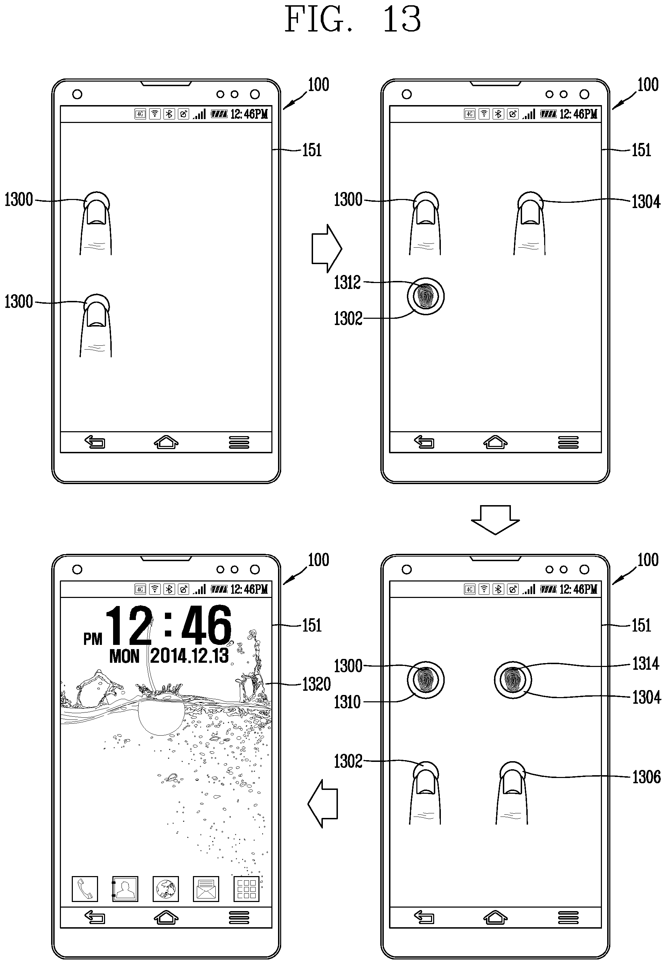

FIG. 13 is an illustration of an example in which a locked state is released by a touch pattern containing information about a plurality of simultaneously sensed fingerprints, in a mobile terminal 100 according to an embodiment of the present invention.

Referring to FIG. 13, the first image of FIG. 13 shows an example in which a plurality of touch inputs are applied simultaneously when the mobile terminal 100 according to an embodiment of the present invention is in locked state. In this case, a fingerprint may be sensed for each of the simultaneously sensed touch inputs. Also, upon sensing a fingerprint, the controller 180 may display this on the display unit 151.

The second and third images of FIG. 13 show an example in which a plurality of touch inputs are applied once again following the touch inputs applied as in the first image of FIG. 13. In this case, as shown in the second and third images of FIG. 13, at least one of the touch inputs may be applied to a different position. Based on a touch pattern formed by a plurality of touch inputs, at least one of which is applied to a different position on the display unit 151, the controller 180 may unlock the mobile terminal 100.

That is, the controller 180 may unlock the mobile terminal 100, based on a touch pattern formed by a first touch input (touch inputs applied simultaneously to a first point 1300 and a second point 1302), a second touch input (touch inputs applied simultaneously to the first point 1300 and a third point 1304), and a third touch input (touch inputs applied simultaneously to the second point 1302 and a fourth point 1306) and also based on fingerprints sensed during application of the first, second, and third touch inputs. The fourth image of FIG. 13 shows an example of this.

Although the above examples shows that fingerprints are sensed from every touch input constituting the first, second, and third touch inputs, it is needless to say that the fingerprints may be sensed from only some of the touch inputs constituting the first, second, and third touch inputs. In this case, the positions or ordinal positions of some of the touch inputs from which fingerprints are sensed, as well as the shapes of the fingerprints, may be factors for determining whether to unlock the mobile terminal 100 or not.

Meanwhile, when unlocking the mobile terminal by a plurality of touch inputs from which a plurality of fingerprints are sensed, the controller 180 may switch the mobile terminal 100 immediately to at least one different operating state, based on the fingerprints sensed during application of the touch inputs. That is, the controller 180 may switch the mobile terminal 100 to an operating state for executing a particular function, based on the positions or ordinal positions of some of the touch inputs from which fingerprints are sensed, among the touch inputs constituting the first, second, and third touch inputs.

Meanwhile, it is needless to say that, in the mobile terminal 100 according to an embodiment of the present invention, the fingerprint information may be used instead of user authentication information (e.g., PIN (personal identity number), which should be entered after more than a preset number of failed unlocking attempts, as well as when unlocking the mobile terminal 100. In this case, the controller 180 may require more fingerprint information than required when unlocking the mobile terminal 100. That is, the controller 180 may display on the display unit 151 screen information for simultaneously receiving a plurality of fingerprints. Also, when a plurality of fingerprints are applied, the mobile terminal 100 may be unlocked based on results of recognition of the shapes of the fingerprints. In this case, the controller 180 may release the locked state based on whether the positions on the display unit 151 where the fingerprints are sensed are registered positions or not, as well as based on the shapes of the fingerprints.

Meanwhile, such fingerprint information may be used for other various purposes, as well as for unlocking the mobile terminal 100. For example, if the user wants to reset a touch pattern for unlocking the mobile terminal 100, the controller 180 may additionally sense fingerprint information besides a current touch pattern. Also, both the touch pattern and the fingerprint information should match registered information so that the information (e.g., touch pattern and/or fingerprint information) required for releasing the locked state can be modified.

Moreover, the controller 180 may use this fingerprint information as a means for additional user authentication. That is, when additional user authentication is needed, like when a bill payment is made, the controller 180 may let the user authenticate with fingerprint information entered by the user.

Meanwhile, such fingerprint information may be used to decide whether to pay a bill or not. That is, in the mobile terminal 100 according to an embodiment of the present invention, when there is a request for payment of an amount exceeding a prescribed limit, the payment may be made or not in response to the payment request depending on whether the user enters the fingerprint information or not. If there is a request for payment of an amount below the prescribed limit, the controller 180 may make the payment in response to the payment request without the user entering the fingerprint information.

Meanwhile, the controller 180 may switch the mobile terminal 100 to an operating state for payment of an amount exceeding a prescribed limit or an operating state for payment of an amount below the prescribed limit, depending on whether the right fingerprint information is entered or not. In this case, once a function related to payment is performed, the controller 180 may make a payment of an amount exceeding the prescribed limit with the right fingerprint information entered by the user, depending on whether the locked state is released or not.

Meanwhile, it is needless to say that the controller 180 of the mobile terminal 100 according to an embodiment of the present invention may restrict some of the currently running functions, depending on whether the fingerprint information is entered or not. For example, when a function for changing the maximum payment limit is executed, the controller 180 may change the payment limit depending on whether the fingerprint information matches registered information. If the fingerprint information does not match registered information, this function may be restricted in such a way that only a reduction of the current payment limit is allowed. In this case, the controller 180 may request the user to authenticate additionally via fingerprint information, or may restrict some of the currently running functions depending on whether the right fingerprint information is entered or not when the mobile terminal 100 is unlocked.

Meanwhile, while the disclosure in the above description states that the user may choose whether to enter a fingerprint or not by showing through a graphical object how a fingerprint is being applied, it is needless to say that the position of a fingerprint input or the ordinal position of a touch input from which a fingerprint is sensed may be predetermined. In this case, when a touch input corresponding to a particular position or ordinal position is applied, a fingerprint may be automatically sensed simultaneously with the touch input without the user choosing to enter it.

Also, the mobile terminal 100 may be unlocked based on fingerprint information generated from the sensed fingerprint and a touch pattern.

Meanwhile, although the above description has been given of an example in which a preset fingerprint sensing condition requires that a touch input is applied for a preset period of time or longer or with more than a certain amount of pressure or that the contact area of the user's finger touching the display unit 151 to apply a touch input is larger than a preset size, the present invention is not limited to this. That is, the user may set as many other conditions as they choose.

Moreover, although the above description has been given of an example in which fingerprint information includes either the point in time at which a fingerprint is sensed during application of a plurality of touch inputs forming a touch pattern or the position on the display unit 151 where the fingerprint is sensed, as well as the shape of the sensed fingerprint, it may include as much other information as possible. For instance, upon sensing a plurality of taps on the display unit 151, the controller 180 may sense the positions where the taps are sensed and the time intervals between the taps. As mentioned above, the time intervals may refer to time intervals between one (first tap) of the taps and another tap (second tap). Alternatively, the time intervals may refer to how long the first tap is held until the start of the second tap.

The present invention can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the terminal. Therefore, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a display unit that displays picture information;
a sensing unit that senses at least one touch input applied on the display unit or a drag input applied following the touch input and that senses the fingerprint of a finger touching the display unit to apply the touch input or drag input; and
a controller that releases a locked state in which reception of control commands is restricted, based on a touch pattern formed by the at least one touch input or the drag input applied following the touch input and at least one fingerprint sensed during application of the touch input or the drag input.

2. The mobile terminal of claim 1, wherein the controller generates fingerprint information based on at least one of the following: at least one sensed fingerprint, the point in time at which the at least one fingerprint is sensed during application of the touch input or the drag input, and unlocks the mobile terminal based the fingerprint information and the touch pattern.

3. The mobile terminal of claim 2, wherein the controller unlocks the mobile terminal if the touch pattern matches a registered one, and switches the unlocked mobile terminal to different operating states depending on whether the fingerprint information matches registered fingerprint information.

4. The mobile terminal of claim 3, wherein the controller switches the mobile terminal to a first operating state in which some of the functions executable on the mobile terminal are restricted, if the fingerprint information does not match registered fingerprint information, and switches the mobile terminal to a second operating state in which all of the functions of the mobile terminal are executable, if the fingerprint information matches registered fingerprint information.

5. The mobile terminal of claim 4, wherein the first operating state is an operating state in which the execution of functions requiring additional user authentication for executing the functions or functions related to the user's personal information is restricted, among the functions executable on the mobile terminal.

6. The mobile terminal of claim 5, wherein the function requiring additional user authentication comprise functions related to bill payments.

7. The mobile terminal of claim 5, wherein the functions related to the user's personal information are functions related to viewing information about the user's identity, sent and received messages, or images stored in the mobile terminal.

8. The mobile terminal of claim 7, wherein, when a function related to the user's personal information is executed while the mobile terminal is in the first operating state, the controller restricts the display of information about the user's identity, sent and received messages, or images stored in the mobile terminal.

9. The mobile terminal of claim 8, wherein, when a function related to the user's personal information is executed while the mobile terminal is in the first operating state, the controller restricts the display of information about the user's identity, sent and received messages, or images stored in the mobile terminal differently, based on which part of the fingerprint information of the sensed fingerprint matches the registered fingerprint information.

10. The mobile terminal of claim 4, wherein, when an event associated with a restricted function occurs while the mobile terminal is in the first operating state, the controller restricts the display of at least part of information relating to the event.

11. The mobile terminal of claim 4, wherein the first and second operating states are operating states in which different user interfaces are provided,
wherein the first operating state is a user interface containing no graphical object associated with the execution of the restricted function.

12. The mobile terminal of claim 4, wherein, if the mobile terminal is in the first operating state, the controller sets a limit on the amount of money payable based on a set amount.

13. The mobile terminal of claim 4, wherein, when there is a request to change a prescribed payment limit, the controller sets a restriction so that only a reduction of the payment limit is allowed depending on the operating state of the mobile terminal.

14. The mobile terminal of claim 3, wherein the fingerprint information varies depending on a fingerprint forming the fingerprint information, the point in time at which the fingerprint is sensed, and the sensed position of the fingerprint, and when the mobile terminal is unlocked, the controller switches the mobile terminal to one of different operating states corresponding to different fingerprints.

15. The mobile terminal of claim 1, wherein the controller senses the fingerprint when a touch input matching a preset fingerprint sensing condition, among the at least one touch input, is applied or the preset fingerprint sensing information is met during application of the drag input,
wherein the fingerprint sensing information is associated with at least one of the following: the length of time the finger touches the display unit, the pressure of the finger, and the area of contact between the display unit and the finger.

16. The mobile terminal of claim 15, wherein the controller displays a graphical object for indicating whether the fingerprint sensing condition is met or not, around a point on the display unit touched with the finger applying the at least one touch input or the drag input.

17. The mobile terminal of claim 16, wherein the graphical object corresponds to one of the following: the length of time the finger touches the display unit, the pressure of the finger, and the area of contact between the display unit and the finger,
wherein, if one among the length of time of the touch, the contact area, and the applied pressure is changed, at least either the size or shape of the graphical object is changed.

18. The mobile terminal of claim 1, wherein, upon sensing the fingerprint, the controller displays a graphical object corresponding to the sensed fingerprint at at least one point on the display unit where the fingerprint is sensed.

19. The mobile terminal of claim 1, wherein, upon sensing the fingerprint, the controller displays a graphical object in at least one area on the display unit to display information on the user's finger matching the sensed fingerprint among registered fingerprints.

20. A method for controlling a mobile terminal, the method comprising:
sensing at least one touch input or a drag input applied on a display unit of the mobile terminal, if the mobile terminal is in locked state in which reception of control commands is restricted;
sensing the fingerprint of the finger applying the drag input or the at least one touch input, depending on whether either the drag input or the at least one touch input meets a preset fingerprint sensing condition or not;
comparing fingerprint information, which is generated based on a touch pattern formed by the at least one touch input and at least one sensed fingerprint, with a registered touch pattern and registered fingerprint information, respectively; and
unlocking the mobile terminal according to the comparison result.
